Europäisches Patentamt

(19) European Patent Office

Office européen des brevets

(11) Numéro de publication : **0 034 689**
**B1**

(12) **FASCICULE DE BREVET EUROPÉEN**

(45) Date de publication du fascicule du brevet :
**28.12.83**

(21) Numéro de dépôt : **80430006.9**

(22) Date de dépôt : **25.02.80**

(51) Int. Cl.³ : **B 01 D 17/02**

(54) **Dispositif de purge automatique d'un liquide déposé dans le fond d'un réservoir contenant deux liquides non miscibles.**

(43) Date de publication de la demande :
**02.09.81 Bulletin 81/35**

(45) Mention de la délivrance du brevet :
**28.12.83 Bulletin 83/52**

(84) Etats contractants désignés :
**AT BE CH DE GB IT NL SE**

(56) Documents cités :
**DE-A- 1 598 819**
**DE-C- 746 946**
**FR-A- 2 243 716**
**US-A- 3 253 711**
**US-A- 3 743 095**
**US-A- 3 743 102**
**Le dossier contient des informations techniques présentées postérieurement au dépôt de la demande et ne figurant pas dans le présent fascicule.**

(73) Titulaire : **SOCIETE D'ETUDE ET DE REALISATION D'EQUIPEMENTS SPECIAUX - S.E.R.E.S. Société anonyme dite:**
**Rue Albert Einstein Z.I. d'Aix les Milles**
**F-13290 - Les Milles (FR)**

(72) Inventeur : **Guigues, Frédéric**
**20, rue du R.I.C.M.**
**F-13100 Aix-en-Provence (FR)**

(74) Mandataire : **Azais, Henri et al**
**c/o CABINET BEAU DE LOMENIE 14, rue Raphael**
**F-13008 Marseille (FR)**

# Dispositif de purge automatique d'un liquide déposé dans le fond d'un réservoir contenant deux liquides non miscibles

La présente invention a pour objet des dispositifs destinés à purger automatiquement un liquide déposé dans le fond d'un réservoir contenant deux liquides non miscibles ayant des constantes diélectriques différentes.

Le secteur technique de l'invention est celui de la construction des dispositifs de purge automatique, notamment de la purge de l'eau contenue dans le fond d'un réservoir de produits pétroliers.

Les raffineries de pétrole comportent des réservoirs ou des bacs contenant des mélanges, par exemple des émulsions d'eau et de produits pétroliers. Dans ces réservoirs, il se produit une stratification des deux phases liquides. Les produits pétroliers s'écoulent par débordement à la partie haute tandis que l'eau s'accumule dans le fond. La hauteur du plan d'eau s'élève progressivement et il est nécessaire d'effectuer des vidanges périodiques.

Dans la suite de l'exposé, on se référera plus particulièrement à cette application, sans que ce choix entraîne une limitation et étant précisé qu'un dispositif selon l'invention peut s'appliquer à la purge automatique de tout liquide contenu dans le fond d'un réservoir qui contient un mélange de deux liquides non miscibles, ayant des constantes diélectriques différentes.

Dans le cas des réservoirs de produits pétroliers, il est rappelé que l'eau évacuée doit contenir le moins possible de produits pétroliers. Au cours d'une purge d'eau, la teneur en huile dans l'eau croît à mesure que l'eau s'évacue et que l'interface séparant l'eau de l'huile se rapproche de l'orifice de purge situé dans le fond du réservoir.

Dans de nombreux cas, la purge de l'eau contenue dans le fond d'un réservoir de produits pétroliers est commandée par une vanne placée sous la surveillance d'un opérateur. Mais il est très difficile pour celui-ci d'apprécier à quel moment il faut arrêter la purge car les eaux sont très noires et, de plus, la teneur en huile croît très rapidement lorsque l'interface eau-huile approche du fond. De plus, les erreurs humaines sont toujours possibles et les conséquences de celles-ci peuvent être très graves. On a donc pensé à utiliser des dispositifs de purge automatique en s'efforçant de mettre au point des dispositifs plus fiables qu'un opérateur.

A ce jour, on n'y est pas parvenu de façon satisfaisante.

On a ainsi proposé dans le brevet US-A-2 121 324 un dispositif pour maintenir sensiblement constant le niveau de l'interface entre deux liquides de viscosité différente. Une vanne de purge motorisée est contrôlée par un détecteur de viscosité qui est un tube de faible section disposé sur un circuit fermé comportant une pompe de circulation et un manomètre à contact électrique. L'objet de ce brevet est différent de celui de la présente demande en ce qu'il n'est pas obligatoirement applicable à deux liquides ayant des constantes diélectriques différentes. Ainsi, l'eau et les produits pétroliers n'ont pas des viscosités suffisamment éloignées pour que le dispositif de brevet américain soit efficace.

Il existe des dispositifs optiques de contrôle des hydrocarbures dans l'eau qui mesurent l'opacité du mélange. Il existe également des appareils de dosage automatique des hydrocarbures contenus dans l'eau qui sont basés sur l'extraction de ces hydrocarbures par un solvant et mesure de l'absorption infrarouge par la solution. Tous ces appareils sont des appareils qui permettent de mesurer avec une grande précision de faibles teneurs en hydrocarbures, mais il ne peuvent pas être utilisés pour contrôler la teneur de l'eau de purge prélevée dans le fond d'un bac de produits pétroliers, car cette eau contient dans tous les cas une teneur en hydrocarbure supérieure à celle que ces appareils tolèrent et, de plus, elle est souvent colorée, ce qui fausse complètement les mesures d'opacité ou d'absorption des infrarouges.

On a également essayé de commander automatiquement une vanne de purge par un système de type bulle à bulle, plongeant dans le réservoir, qui indique en principe une pression qui dépend de la hauteur de la colonne d'eau dans le réservoir. Malheureusement, la densité des produits pétroliers qui sont traités dans les raffineries varie entre 0,8 et 1,05 selon la provenance du pétrole brut et le fonctionnement des dispositifs de type bulle à bulle n'est donc pas fiable dans ces conditions.

Un autre dispositif de séparation d'un liquide situé dans le fond d'un réservoir de décantation a été proposé dans la demande de brevet FR-A1-2 243 716. Il comporte deux vannes motorisées commandées alternativement par un détecteur par conductimétrie ayant deux électrodes auxquelles est appliquée une tension alternative. L'inconvénient principal d'un tel appareil est la différence de potentiel importante à laquelle doivent être soumises les électrodes pour obtenir une intensité de courant suffisante. Ce serait dangereux dans le cas d'une purge automatique d'un réservoir de produits pétroliers.

Par ailleurs, dans la demande de brevet DE-A-2 519 701, on décrit un dispositif pour pomper une nappe flottante d'huile en l'aspirant à travers un flotteur d'aspiration. Une cellule de mesure est disposée au refoulement de la pompe et contrôle le fonctionnement de celle-ci. Elle comporte une sonde qui mesure une constante physique, par exemple la constante diélectrique, la densité ou la flottabilité de l'huile. Il ne s'agit pas de la purge automatique d'un fond de réservoir avec vanne de purge automatisée et sonde capacitive commandant automatiquement cette vanne.

On connaît des détecteurs de niveau de type capacitif qui sont composés d'une sonde capacitive enfermée dans une gaine de matière plastique qui est placée verticalement, horizontalement ou inclinée dans un réservoir et qui est mise sous tension. Cette sonde constitue une des électrodes d'un condensateur tandis que les parois du réservoir, qui sont mises à la terre, forment la deuxième électrode. La capacité de ce condensateur varie avec la valeur de la constante diélectrique du milieu qui sépare les deux armatures. Un tel dispositif est utilisé couramment comme indicateur de niveau d'un produit liquide ou pulvérulent dans un réservoir. On a également essayé d'utiliser une sonde capacitive pour indiquer le niveau de l'interface séparant deux liquides non miscibles ayant des constantes diélectriques différentes. Notamment, des essais ont été faits dans un réservoir de produits pétroliers pour détecter le niveau de l'interface séparant les hydrocarbures de l'eau qui s'accumule dans le fond du réservoir et pour commander automatiquement l'ouverture et la fermeture d'une vanne de vidange. A ce jour, les essais n'ont pas été concluants.

En effet, il est intéressant de détecter l'interface le plus près possible du fond du réservoir afin que le volume d'eau dans le réservoir, qui constitue un volume mort, soit le plus réduit possible. Il faut donc placer la sonde dans le fond du réservoir, à proximité de l'orifice de purge et, de préférence, légèrement inclinée ou horizontalement pour augmenter sa sensibilité. Mais pendant la purge, l'interface de séparation eau huile n'est plus horizontale lorsqu'elle arrive à proximité des orifices de purge. Il se produit autour de ceux-ci des vortex, de sorte qu'il arrive que la sonde soit encore plongée dans l'eau alors que de l'huile pure ou un mélange riche en huile s'écoule par la purge.

Une autre difficulté réside dans le fait que la sonde capacitive placée dans le fond d'un réservoir de produits pétroliers se recouvre rapidement de dépôts d'hydrocarbures lourds et les indications de la sonde manquent alors de fidélité. Il faut la sortir fréquemment du réservoir pour la nettoyer mais ces opérations de nettoyage nécessitent la vidange du réservoir et beaucoup de précautions comme toutes les interventions sur une installation présentant des risques d'explosion.

On connaît aussi un dispositif tel que décrit dans la demande de brevet DE-A-883 741, comportant une sonde capacitive statique, « disposée de telle sorte que l'interface entre les deux liquides à séparer se trouve entre les électrodes ». Une telle sonde est placée dans une colonne située à l'extérieur du réservoir et communiquant avec ce dernier. L'inconvénient principal d'un tel appareil est que le liquide ne circule pas dans cette colonne, il s'en suit une pollution entraînant un mauvais fonctionnement. Les nettoyages de la sonde doivent être fréquents.

Les brevets US-A-3 743 025 et US-A-3 743 102 décrivent des séparateurs à vortex d'un mélange d'eau et de pétrole qui sont équipés d'une vanne de régulation de la section d'un orifice axial de sortie du pétrole. Cette vanne est commandée automatiquement par un servomoteur qui reçoit des informations sur la concentration en pétrole de deux détecteurs de concentration capacitifs placés en série sur le conduit d'entrée et sur le conduit de sortie du pétrole.

L'objectif de la présente invention est de procurer des dispositifs de purge automatique du liquide qui se dépose dans le fond d'un réservoir de décantation contenant un mélange de deux liquides non miscibles, par exemple un mélange d'eau et de produits pétroliers, qui comporte une sonde permettant de fermer automatiquement une vanne de purge dès que des traces du liquide le plus léger apparaissent dans le mélange qui traverse la vanne.

La sonde utilisée doit avoir une très grande sensibilité pour détecter des traces et, malgré cela, elle doit être très fiable, c'est-à-dire que son fonctionnement ne doit pas être perturbé par des causes d'erreur telles que dépôts de sédiments ou de salissures ou présence d'air.

Les objectifs de l'invention sont atteints au moyen d'un dispositif conforme aux revendications annexées.

Un dispositif de purge automatique d'un liquide déposé dans le fond d'un réservoir contenant deux liquides non miscibles comporte, de façon connue, une vanne de purge motorisée qui est raccordée à la partie inférieure du réservoir et une sonde de détection qui est placée dans un conduit où s'écoule du liquide provenant de la partie inférieure du réservoir et qui commande automatiquement la vanne de purge.

Un dispositif selon l'invention comporte une sonde capacitive qui est placée dans un tube vertical dans lequel du liquide provenant de la partie inférieure du réservoir entre par l'extrémité inférieure et s'écoule à la partie supérieure par débordement au-dessus d'un seuil, ladite sonde capacitive étant placée dans ledit tube au-dessous dudit seuil, de sorte qu'elle baigne entièrement dans le liquide.

Selon un premier mode de réalisation, la sonde capacitive est disposée dans le conduit d'écoulement du liquide situé à l'aval de la vanne de purge.

Selon un autre mode de réalisation, la sonde capacitive est disposée dans un conduit d'écoulement à faible débit, qui est raccordé au réservoir à un niveau supérieur au niveau de la conduite de purge.

Dans ce deuxième mode de réalisation, ledit conduit d'écoulement à faible débit peut comporter une pompe qui renvoie dans le réservoir le liquide qui a traversé le conduit contenant la sonde capacitive si par exemple le liquide le plus léger présente un danger, par exemple un risque de pollution.

De préférence, le conduit d'écoulement à faible débit est raccordé audit réservoir à plusieurs niveaux par l'intermédiaire de vannes qui permettent de sélectionner le niveau de prélèvement.

Avantageusement, le conduit d'écoulement à faible débit comporte une deuxième vanne motorisée qui est commandée automatiquement par la sonde capacitive, en même temps que la vanne de purge.

Un dispositif selon l'invention peut comporter, en outre, une minuterie qui envoie périodiquement une impulsion d'ouverture desdites vannes motorisées et un relais temporisé qui maintient lesdites vannes ouvertes pendant la durée de la temporisation.

L'invention a pour résultat de nouveaux dispositifs de purge automatique d'un liquide qui stratifie dans le fond d'un réservoir. Les dispositifs selon l'invention fonctionnent de façon fiable. En effet, le liquide qui se trouve entre la sonde capacitive et le conduit vertical dans lequel celle-ci est plongée est un liquide qui circule. On calcule les sections pour qu'il circule avec une vitesse suffisante pour nettoyer la surface de la sonde capacitive, par exemple une vitesse comprise entre 0,5 m et 2 m par seconde, de telle sorte que pendant toute la durée d'une purge, celle-ci reste propre ce qui évite les erreurs de mesure dues aux salissures de la sonde.

Les dispositifs selon l'invention permettent notamment de commander automatiquement la purge de l'eau qui stratifie dans le fond des réservoirs de produits pétroliers. Une purge automatique commandée par un dispositif selon l'invention fonctionne de façon fiable et permet d'arrêter la purge avant que la teneur en huile de l'eau n'ait atteint une valeur supérieure à une limite tolérée.

La variante de réalisation dans laquelle on fait circuler autour de la sonde capacitive du liquide qui est prélevé dans le réservoir au-dessus du niveau de la purge permet d'augmenter encore la sécurité et de ne purger que de l'eau dépourvue d'huile surtout si l'on renvoie vers le réservoir, au moyen d'une pompe de recyclage, le faible débit pollué qui traverse la sonde capacitive.

Les dispositifs selon l'invention présentent l'avantage que la sonde capacitive, située en dehors du réservoir, est plus facile à démonter et à entretenir qu'une sonde plongée dans le réservoir.

La description suivante se réfère aux dessins annexés qui représentent, sans aucun caractère limitatif, des exemples de réalisation de dispositifs automatiques de purge selon l'invention.

La figure 1 est un schéma d'ensemble d'un réservoir de produits pétroliers équipé d'un dispositif de purge automatique selon l'invention ;

la figure 2 est un schéma des circuits électriques du dispositif de la figure 1 ;

la figure 3 est une coupe axiale de la sonde capacitive équipant un dispositif selon l'invention ;

la figure 4 est un schéma d'ensemble d'un réservoir de produits pétroliers équipé d'une variante de dispositif selon l'invention.

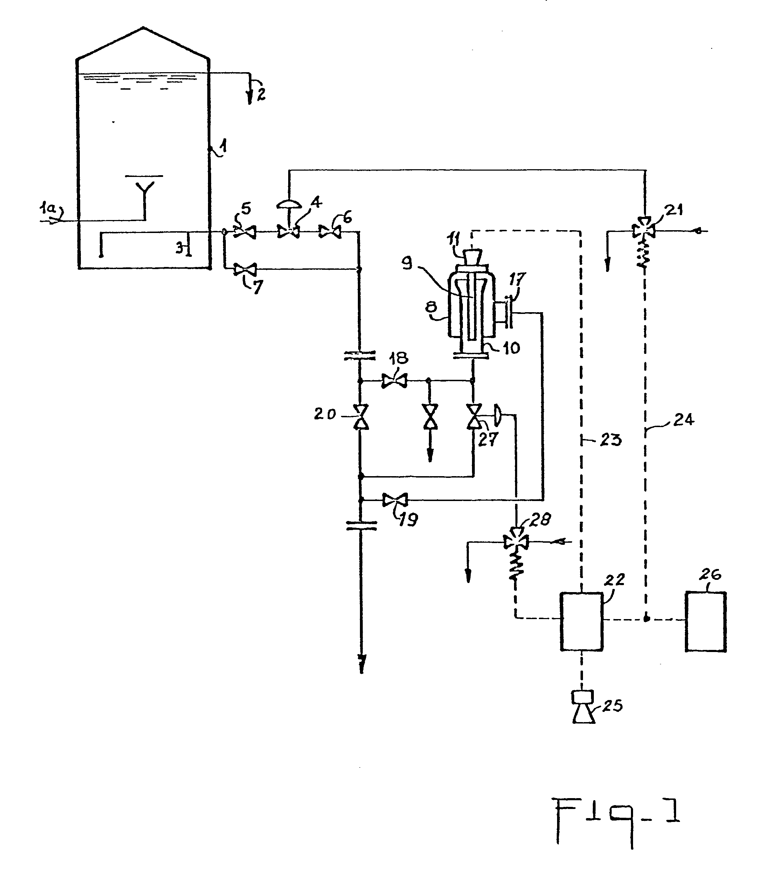

La figure 1 représente un réservoir ou bac 1 contenant des produits pétroliers, par exemple un réservoir de résidus de raffinerie (slope tank). Il est rappelé que cette application choisie à titre d'exemple n'est pas limitative. Les produits pétroliers entrant dans le réservoir par la conduite 1a sont une émulsion d'hydrocarbures et d'eau et le bac 1 sert de séparateur de l'eau qui se dépose dans le fond du bac. Les hydrocarbures s'évacuent gravitairement à la partie supérieure du bac par la conduite de trop-plein 2. La partie inférieure du bac comporte une conduite 3 de purge de l'eau. Cette conduite est équipée d'une vanne motorisée 4 qui est intercalée, entre deux vannes d'isolement manuelles 5 et 6 et qui comporte une dérivation équipée d'une vanne 7 (vanne de by-pass). L'eau évacuée du réservoir est normalement envoyée vers un décanteur.

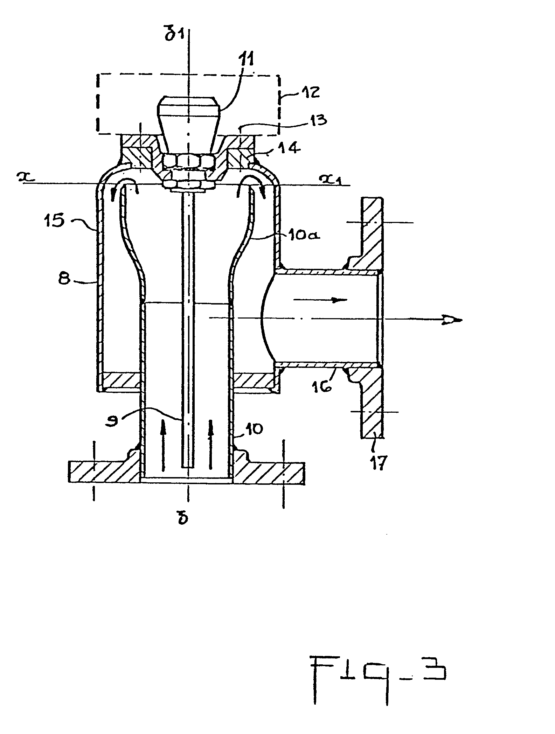

Un dispositif 8 selon l'invention contenant une sonde capacitive 9 est disposé sur un conduit d'écoulement à travers lequel on fait circuler l'eau de purge. La figure 3 représente une coupe axiale à plus grande échelle du dispositif 8. Le dispositif 8 comporte une sonde capacitive 9 qui est disposée suivant l'axe $z\,z_1$ d'un tube vertical 10.

Le liquide provenant du réservoir 1 entre dans le tube 10 par l'extrémité inférieure et il sort de celui-ci à l'extrémité supérieure, par débordement au-dessus d'un seuil $x\,x_1$, comme l'indiquent les flèches. La sonde 9 pénètre dans l'extrémité supérieure du tube 10 et elle est placée au-dessous du seuil $x\,x_1$, de sorte que, pendant une purge, elle baigne entièrement dans du liquide qui circule autour de la sonde 9. La section du type 10 est choisie de telle sorte que la vitesse de montée du liquide dans le tube 10 soit comprise entre 0,5 m et 2 m/seconde, de sorte qu'elle est supérieure à la vitesse de sédimentation des particules solides en suspension dans le liquide et que le courant balaye les parois externes de la sonde et empêche que des salissures ne se déposent sur les parois externes de la sonde. La sonde capacitive 9 est une sonde connue des techniciens, qui est utilisée couramment comme indicateur de niveau et qu'il est inutile de décrire en détail car elle ne constitue pas en elle-même l'invention. On rappelle seulement qu'elle est constituée par une tige métallique, enrobée entièrement dans une gaine en matière plastique, qui est alimentée sous une tension continue, par exemple une tension de 10 V. Cette tige métallique constitue une électrode d'un condensateur cylindrique dont l'autre électrode est constituée par le tube métallique 10 qui est connecté à la masse. Le liquide qui circule dans le tube 10, autour de la sonde 9 constitue le diélectrique du condensateur dont la valeur varie avec la teneur en hydrocarbure de l'eau, ce qui fait varier la capacité. La sonde comporte un préamplificateur incorporé qui est logé dans la tête 11 de la sonde. Cette tête est enfermée dans un boîtier antidéflagrant 12.

L'ensemble constitué par la sonde 9, la tête 11 contenant le préamplificateur et le boîtier 12 est fixé par des vis 13 sur une bride 14 qui est supportée par l'extrémité supérieure d'une chambre cylindrique 15, d'axe $z\,z_1$, qui entoure le tube 10 et qui délimite avec celui-ci un espace annulaire à travers lequel le liquide qui déborde du haut du tube 10, circule vers un conduit de sortie 16 portant une bride 17 de raccordement. Les sections de l'espace annulaire et du conduit 16 sont au moins égales à la section transversale du tube 10. Le tube 10 comporte à son extrémité supérieure dans laquelle pénètre la partie inférieure de la tête 11, un évasement 10a, de sorte que la section de passage du liquide autour de la tête soit égale à la section du tube 10.

Un dispositif électronique détecte les variations de capacité de la sonde 9 en fonction de la teneur en hydrocarbure de l'eau de purge. Ce dispositif électronique commande un relais inverseur ou tout autre dispositif équivalent comportant un contact mobile S1 qui est ouvert lorsque l'eau est pure ou ne contient que des traces d'hydrocarbure et qui est fermé dès que la teneur en hydrocarbures dépasse une valeur limite.

Revenant à la figure 1, on voit que l'ensemble 8 est connecté sur la conduite d'évacuation située à l'aval de la vanne de purge 4 par l'intermédiaire de deux vannes manuelles 18 et 19, situées de part et d'autre du dispositif 8. Une vanne manuelle 20 permet le passage direct de l'eau de purge vers le décanteur lorsque les vannes 18 et 19 sont fermées. Dans le cas de la figure 1, la vanne motorisée 4 est une vanne pneumatique qui est pilotée par une électrovanne 21. Le repère 22 représente les circuits électriques et électroniques connectés à la sonde capacitive 9 par la ligne 23. Ces circuits comportent une ligne de sortie 24 qui commande automatiquement l'électrovanne 21 et donc la vanne de purge 4. Les circuits 22 commandent également une alarme 25 dans le cas où la vanne de purge reste ouverte pendant une durée anormalement longue. Lorsque la vanne de purge 4 a été fermée automatiquement, il n'y a plus de circulation de liquide à travers le dispositif 8 qui ne peut donc commander automatiquement la réouverture de la vanne 4.

Un dispositif selon l'invention comporte une minuterie ou un programmateur cyclique 26 qui envoie périodiquement sur l'électrovanne 21 une impulsion qui provoque la réouverture de la vanne de purge 4.

Après la fermeture de la vanne de purge, le tube 10 reste plein de liquide. Si celui-ci contient des hydrocarbures lourds, le liquide qui est purgé est un liquide chauffé à une température de l'ordre de 50° à 60 °C. Entre deux purges, lorsque le liquide qui séjourne dans le tube 10 se refroidit, les hydrocarbures lourds risquent de se solidifier et de boucher le passage. Pour remédier à cet inconvénient, l'extrémité inférieure du tube 10 est connectée sur une vanne de vidange motorisée 27 qui est pilotée par une électrovanne 28, laquelle est commandée par le dispositif 22 en sens inverse de l'électrovanne 21, c'est-à-dire que la vanne de vidange 27 s'ouvre lorsque la vanne de purge 4 se referme et, inversement, elle se ferme lorsque la vanne de purge s'ouvre.

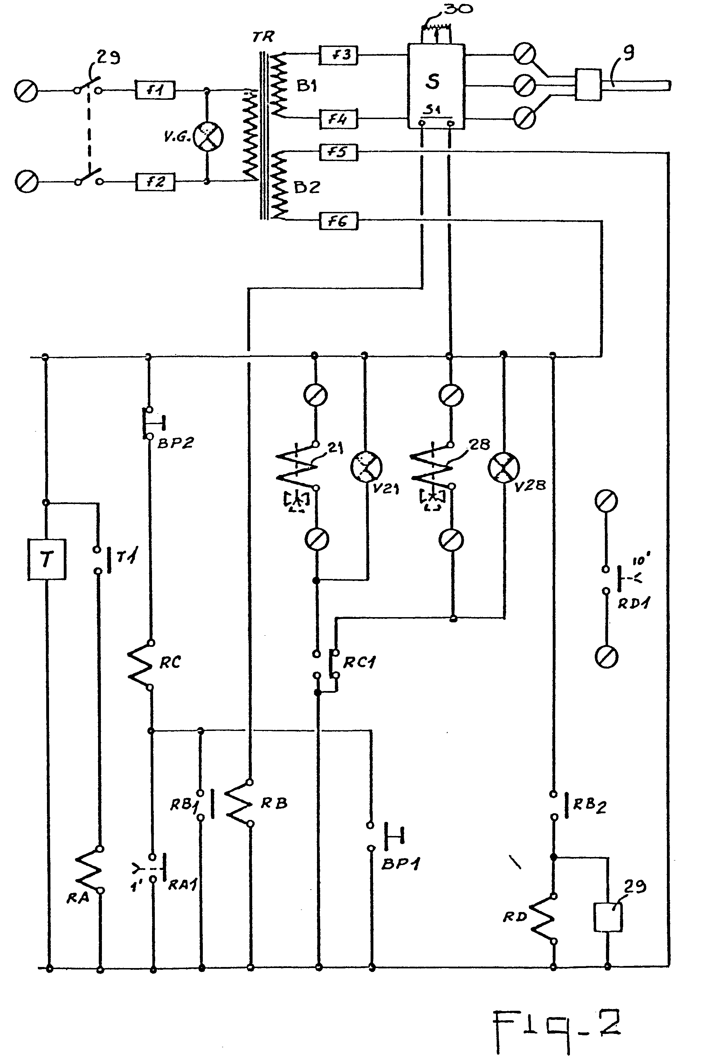

La figure 2 est un schéma d'ensemble des circuits électroniques. Ceux-ci comprennent un transformateur Tr dont le primaire est connecté à travers des fusibles f1 et f2 et à travers un interrupteur 29 sur une source de courant alternatif.

Le transformateur Tr comporte un premier enroulement secondaire B1 qui alimente à travers des fusibles f3 et f4 le boîtier S de la sonde capacitive 9. Ce boîtier contient un contact mobile S1 qui est fermé lorsque le liquide qui traverse le tube 10 est de l'eau pure ou peu polluée et qui est ouvert dès que cette eau contient une quantité d'hydrocarbures supérieure à une limite maximum déterminée, que l'on peut faire varier en agissant sur un potentiomètre 30 incorporé au boîtier S. Le transformateur Tr comporte un deuxième enroulement secondaire B2 qui alimente sous une faible tension à travers des fusibles f5 et f6 les différents circuits électroniques. Ceux-ci comportent une minuterie T du type programmateur cyclique (timer) qui ferme périodiquement le contact T1, lequel contact T1 commande l'alimentation d'un relais temporisé RA ayant un contact RA1 qui est temporisé à l'ouverture pendant par exemple une minute. Le contact RA1 reste donc fermé pendant une minute après chaque impulsion délivrée par la minuterie T. La durée de temporisation du contact RA1 est déterminée par la distance du dispositif 8 par rapport à la vanne de purge 4. Elle doit être supérieure au temps nécessaire pour que l'eau qui s'écoule à travers la vanne de purge 4 parvienne au dispositif 8 et qu'un écoulement se crée à travers celui-ci.

Le contact RA1 pilote un relais RC ayant un contact inverseur RC1 qui pilote les bobines des deux électrovannes 21 et 29, de telle sorte que l'une est excitée lorsque l'autre est au repos et inversement.

Un bouton poussoir BP1 permet d'alimenter manuellement le relais RC et par conséquent l'électrovanne 21 qui commande l'ouverture de la vanne de purge 4 lorsqu'elle est excitée.

Un deuxième bouton poussoir BP2 permet de couper l'alimentation du relais RC et par conséquent d'exciter l'électrovanne 28 qui commande l'ouverture de la vanne de vidange 27. Des voyants lumineux V21 et V28 signalent l'excitation de l'électrovanne correspondante lorsqu'ils sont allumés. Le contact mobile S1 de la sonde capacitive 9 pilote un relais RB dont un contact RB1 pilote le relais RC en parallèle avec le contact temporisé RA1.

Le fonctionnement est le suivant :

Toutes les heures par exemple, la minuterie T ferme le contact T1 qui excite le relais RA et le contact RA1 reste fermé pendant la durée de la temporisation qui est par exemple d'une minute. Pendant cette durée de temporisation, l'action de la sonde 9 est neutralisée puisque le relais RC est excité à travers le contact RA1 quelle que soit la position du contact RB1. Le relais RC étant excité, le contact RC1 excite l'électrovanne 21 qui commande alors l'ouverture de la vanne de purge et de l'eau s'écoule à travers celle-ci et à travers le dispositif 8.

Après la fin de la temporisation, le contact RA1 s'ouvre et le relais RC est alors piloté par le contact RB1 donc par le contact S1. Si l'eau qui s'écoule à travers la disposition de contrôle 8 est de l'eau propre, le contact S1 est fermé, le relais RC reste excité et la vanne de purge 4 reste ouverte. A mesure que l'on purge l'eau contenue dans le fond du réservoir 1, la teneur en hydrocarbures augmente et lorsqu'elle atteint une limite déterminée par le réglage de la sonde 9, le contact S1 s'ouvre. Le relais RC n'est plus excité.

Le contact inverseur RC1 bascule sur la position représentée sur la figure 2. L'électrovanne 21 n'est plus excitée et la vanne de purge 4 se ferme. L'électrovanne 28 est excitée et la vanne de vidange 27 s'ouvre.

Les circuits électriques comportent, en outre, un relais RD qui est piloté par un contact RB2 du relais RB. Le relais RD comporte un contact RD1 qui est temporisé à la fermeture et qui est incorporé dans le circuit de l'alarme 25. Lorsque la vanne de vidange reste ouverte pendant un temps supérieur à la temporisation de RD1, qui correspond à un temps anormalement long d'ouverture, l'alarme 25 signale cette anomalie. Un compteur horaire 29, commandé par le contact RB2 totalise les durées de vidange.

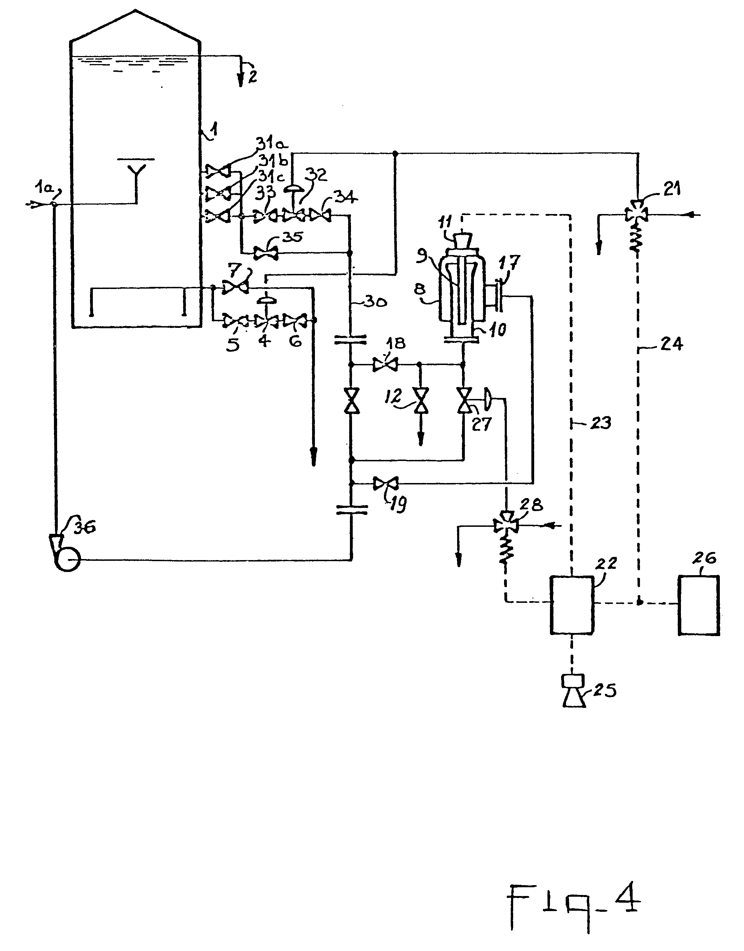

La figure 4 représente un schéma d'ensemble d'une variante de réalisation avantageuse dans le cas où l'on désire arrêter la purge du réservoir 1 pour une teneur en huile très faible et ne rejeter que de l'eau très peu polluée.

Le dispositif selon la figure 1 ne permet pas d'obtenir ce résultat car il faut attendre que l'eau qui s'écoule par la vanne de purge contienne une certaine quantité d'hydrocarbures pour que la sonde 9 agisse.

Les parties du dispositif de la figure 4 homologues à celles de la figure 1 sont désignées par les mêmes repères.

La vanne automatique de purge 4 reste placée dans le fond du réservoir 1. Par contre, la sonde capacitive 9 n'est plus disposée en aval de la vanne de purge 4. Elle est disposée dans un conduit d'écoulement à faible débit 30 qui est raccordé au réservoir 1 à un niveau supérieur à celui de la purge. Le conduit 30 peut comporter plusieurs branchements sur le réservoir 1 situés à des niveaux différents et munis de vannes 31a, 31b, 31c qui permettent de sélectionner le niveau du prélèvement. Le conduit 30 comporte une vanne motorisée 32, avec ses vannes d'isolement 33, 34 et la vanne d'évitement 35. La vanne motorisée 32 est pilotée par l'électrovanne 21 qui pilote la vanne de vidange 4. Les circuits électriques de la figure 2 sont inchangés. Le liquide qui s'écoule à faible débit par la conduite 30 et qui a traversé le dispositif de contrôle 8 est repris par une pompe de circulation 36 et renvoyé dans la conduite 1a qui alimente le réservoir 1.

Grâce à ce dispositif, la vanne de vidange 4 située dans le fond du bac permet d'évacuer un débit important d'eau très propre tandis que le faible débit d'eau qui traverse la sonde capacitive et qui est prélevé plus haut dans le réservoir, peut être plus pollué, ce qui permet d'obtenir un signal de fermeture de la vanne de purge 4 avant que la zone polluée n'atteigne celle-ci.

Bien entendu, sans sortir du cadre de l'invention, les divers éléments constitutifs des dispositifs qui viennent d'être décrits à titre d'exemple pourront être remplacés par des dispositifs équivalents, remplissant les mêmes fonctions.

**Revendications**

1. Dispositif de purge automatique d'un liquide déposé dans le fond d'un réservoir (1) contenant deux liquides non miscibles du type comportant une vanne de purge motorisée qui est raccordée à la partie inférieure dudit réservoir et une sonde de détection, qui est placée dans un conduit ou s'écoule du liquide provenant de la partie inférieure du réservoir et qui commande automatiquement ladite vanne de purge, caractérisé en ce que la sonde de détection est une sonde capacitive (9) placée dans un tube vertical (10) dans lequel du liquide provenant de la partie inférieure dudit réservoir (1) entre par l'extrémité inférieure et s'écoule à la partie supérieure par débordement au-dessus d'un seuil (x x1), ladite sonde capacitive (9) étant placée dans ledit tube (10) au-dessous dudit seuil (x x1) de sorte qu'elle baigne entièrement dans ledit liquide.

2. Dispositif selon la revendication 1, caractérisé en ce que ladite sonde capacitive (9) est disposée dans le circuit d'écoulement du liquide situé à l'aval de la vanne de purge (4).

3. Dispositif selon la revendication 1, caractérisé en ce que ladite sonde capacitive est disposée dans un conduit d'écoulement à faible débit (30) qui est raccordé audit réservoir (1) à un niveau supérieur au niveau de la conduite de purge.

4. Dispositif selon la revendication 3, caractérisé en ce que ledit conduit d'écoulement à faible débit (30) comporte une pompe (36) qui renvoie dans ledit réservoir (1) le liquide qui a traversé le conduit contenant ladite sonde capacitive (9).

5. Dispositif selon l'une quelconque des revendications 3 et 4, caractérisé en ce que ledit conduit d'écoulement à faible débit (30) est raccordé audit réservoir à plusieurs niveaux par l'intermédiaire de vannes (31a, 31b, 31c) qui permettent de sélectionner le niveau de prélèvement.

6. Dispositif selon l'une quelconque des revendications 3 à 5, caractérisé en ce que ledit conduit d'écoulement à faible débit (30) comporte une deuxième vanne motorisée (32) qui est commandée automatiquement par ladite sonde capacitive (9), simultanément avec ladite vanne de purge (4).

7. Dispositif selon l'une quelconque des revendications 1 à 6, caractérisé en ce qu'il comporte une minuterie (26) T qui envoie périodiquement une impulsion d'ouverture desdites vannes motorisées (4, 27, 32) et un relais temporisé (RA) qui maintient lesdites vannes ouvertes pendant la durée de la temporisation.

8. Dispositif selon l'une quelconque des revendications 1 à 7, caractérisé en ce que le liquide s'écoule autour de ladite sonde capacitive (9) à une vitesse comprise entre 0,5 m et 2 m/seconde.

9. Dispositif selon l'une quelconque des revendications 1 à 8, caractérisé en ce que l'extrémité inférieure dudit tube vertical (10) est connectée sur une vanne de vidange motorisée (27), laquelle est commandée automatiquement par ladite sonde capacitive en sens inverse de ladite vanne de purge (4) du réservoir (1).

**Claims**

1. Device for the automatic draining of a liquid deposited at the bottom of a reservoir (1) containing two non-miscible liquids of the type comprising a motor-operated draining valve which is connected to the lower part of said reservoir and a detecting probe which is placed inside a conduit in which flows a liquid coming from the lower part of the reservoir and which controls automatically the said draining valve, characterized in that the detecting probe is a capacitive probe (9) placed inside a vertical tube (10) into which some liquid coming from the lower part of said reservoir (1) flows through the lower end, and comes out at the upper part by exceeding a threshold (x x1), the said capacitive probe (9) being placed inside the said tube (10) underneath the said threshold (x x1) so that it is fully immersed in said liquid.

2. Device according to claim 1, characterized in that the said capacitive probe (9) is placed inside the liquid-flowing conduit situated downstream of the draining valve (4).

3. Device according to claim 1, characterized in that the said capacitive probe is placed inside a low-output flowing conduit (30) which is connected to the said reservoir (1) at a level which is higer than the level of the draining conduit.

4. Device according to claim 3, characterized in that the said low-output flowing conduit (30) comprises a pump (36) which returns into the said reservoir (1) the liquid which has gone through the conduit containing the said capacitive probe (9).

5. Device according to any one of claims 3 and 4, characterized in that the said low output flowing conduit (30) is connected to the said reservoir at several levels, via valves (31a, 31b, 31c) permitting to select the removing level.

6. Device according to one of claims 3 to 5, characterized in that the said low-output flowing conduit (30) comprises a second motor-operated valve (32) which is controlled automatically by the said capacitive probe (9), simultaneously with the said draining valve (4).

7. Device according to one of claims 1 to 6, characterized in that it comprises a timing mechanism (26) T sending periodically a pulse which opens the said motor-operated valves (4, 27, 32) and a timing relat (RA) which keeps the said valves open throughout the timing.

8. Device according to one of claims 1 to 7, characterized in that the liquid flows around the said capacitive probe (9) at a speed varying between 0.5 m and 2 m per second.

9. Device as claimed in one of claims 1 to 8, characterized in that the lower end of the said vertical tube (10) is connected to a motor-operated draining valve (27) which latter is automatically controlled by the said capacitive probe in reverse to the said draining valve (4) of the reservoir (1).

**Ansprüche**

1. Vorrichtung zum automatischen Auslassen einer am Boden eines zwei miteinander nicht mischbare Flüssigkeiten enthaltenden Behälters (1) abgesetzten Flüssigkeit, mit einem mit Motor versehenen Auslaßventil, das an den unteren Teil des Behälters angeschlossen ist, und einer Meßsonde, die in einer Leitung, in der aus dem unteren Teil des Behälters kommende Flüssigkeit fließt, angeordnet ist und das Auslaßventil automatisch steuert, dadurch gekennzeichnet, daß die Meßsonde eine kapazitive Sonde (9) ist, die in einem vertikalen Rohr (10) angeordnet ist, in welches aus dem unteren Teil des Behälters (1) kommende Flüssigkeit durch das untere Ende eindringt und durch Überlaufen einer Schwelle (x-x1) in den oberen Teil fließt, wobei die kapazitive Sonde (9) im Rohr (10) unterhalb der Schwelle (x-x1) derart angeordnet ist, daß sie in der Flüssigkeit vollständig eintaucht.

2. Vorrichtung nach Anspruch 1, dadurch gekennzeichnet, daß die kapazitive Sonde (9) in der stromabwärts vom Auslaßventil (4) befindlichen Flüssigkeitsdurchflußleitung angeordnet ist.

3. Vorrichtung nach Anspruch 1, dadurch gekennzeichnet, daß die kapazitive Sonde in einer Durchflußleitung mit geringem Durchsatz (30) angeordnet ist, welche oberhalb der Auslaßleitung mit dem Behälter (1) verbunden ist.

4. Vorrichtung nach Anspruch 3, dadurch gekennzeichnet, daß die Durchflußleitung mit geringem Durchsatz (30) eine Pumpe (36) zum Rückbefördern der Flüssigkeit, welche die die kapazitive Sonde (9) enthaltende Leitung durchströmt hat, zurück in den Behälter (1) aufweist.

5. Vorrichtung nach einem der Ansprüche 3 und 4, dadurch gekennzeichnet, daß die Durchflußleitung mit geringem Durchsatz (30) in verschiedenen Höhen mittels Ventilen (31a, 31b, 31c) mit dem Behälter verbunden ist, welche Ventile eine Auswahl der Entnahmehöhe gestatten.

6. Vorrichtung nach einem der Ansprüche 3 bis 5, dadurch gekennzeichnet, daß die Durchflußleitung mit geringem Durchsatz (30) ein zweites mit Motor versehenes Ventil (32) umfaßt, das von der kapazitiven Sonde (9) gleichzeitig mit dem Auslaßventil (4) automatisch gesteuert ist.

7. Vorrichtung nach einem der Ansprüche 1 bis 6, dadurch gekennzeichnet, daß sie einen Zeitgeber (26, T) umfaßt, der periodisch einen Öffnungsimpuls an die mit Motor versehenen Ventile (4, 27, 32) gibt, und ein Zeitrelais (RA), das die Ventile während der Dauer der Verweilzeit offenhält.

8. Vorrichtung nach einem der Ansprüche 1 bis 7, dadurch gekennzeichnet, daß die Flüssigkeit mit einer Geschwindigkeit zwischen 0,5 m und 2 m/s um die kapazitive Sonde (9) fließt.

9. Vorrichtung nach einem der Ansprüche 1 bis 8, dadurch gekennzeichnet, daß das untere Ende des vertikalen Rohres (10) an ein mit Motor versehenes Ablaßventil (27) angeschlossen ist, welches in umgekehrtem Sinn zum Auslaßventil (4) des Behälters (1) automatisch von der kapazitiven Sonde gesteuert ist.

Fig-1

Fig-2

Fig-3

Fig_4